## Europäisches Patentamt
## European Patent Office
## Office européen des brevets

(19)

(11) Numéro de publication: **0 110 739**
**B1**

(12) **FASCICULE DE BREVET EUROPEEN**

(45) Date de publication du fascicule du brevet:
**17.09.86**

(21) Numéro de dépôt: **83401979.6**

(22) Date de dépôt: **11.10.83**

(51) Int. Cl.⁴: **E 02 B 3/22**

(54) **Défense d'acccstage flottante.**

(30) Priorité: **22.10.82 FR 8217680**

(43) Date de publication de la demande:
**13.06.84 Bulletin 84/24**

(45) Mention de la délivrance du brevet:
**17.09.86 Bulletin 86/38**

(84) Etats contractants désignés:
**BE DE GB IT LU NL**

(56) Documents cités:
**DE - A - 2 800 640**
**FR - A - 2 367 871**
**GB - A - 2 064 713**

(73) Titulaire: **Caoutchouc Manufacturé et Plastiques Société Anonyme dite:, 49 rue Jean-Jaurès, F-95871 Bezons (FR)**

(72) Inventeur: **Lasserre, Jean, 10, rue Albert Laurenson, F-92100 Boulogne (FR)**
Inventeur: **Korbuly, Gergely, 30 Avenue Guy de Maupassant, F-78400 Chatou (FR)**

ACTORUM AG

**Description**

L'invention concerne les défenses d'accostage disposées le long des quais des ports maritimes et fluviaux pour protéger à la fois les navires et les quais contre les chocs d'accostage. Elle vise plus spécialement des défenses de type cylindrique constituées d'un manchon creux en caoutchouc à paroi épaisse qui est assujetti le long de la paroi verticale des quais par les liens souples laissant au manchon une certaine liberté de déplacement par rapport au quai.

Ces défenses cylindriques en caoutchouc ont l'avantage d'assurer un bon amortissement des chocs d'accostage (elles fonctionnent d'abord par flexion de la paroi du manchon puis en compression du caoutchouc après écrasement complet) elles sont rustiques et relativement bon marché par rapport à d'autres systèmes de défenses en caoutchouc plus élaborées.

Pour certaines installations portuaires réalisées en eaux à niveau variable (marées importantes) il est apparu nécessaire de réaliser ces défenses cylindriques en mélange caoutchouteux plein présentant un poids spécifique inférieur à 1 de façon que le manchon puisse flotter et suivre les variations de niveau. Cela est obtenu en utilisant des charges à faible densité comme charge renforcante du caoutchouc. Mais avec cette technique on arrive difficilement à obtenir pour la caoutchouc du manchon des densités inférieures à 0,95 et l'utilisation de charges inertes pus légères altèrerait de façon inadmissible les caractéristiques d'élasticité et d'amortissement du caoutchouc. On a réalisé aussi des défenses flottantes entièrement en matériau élastomère à structure cellulaire. Mais ce genre de défense présente des caractéristiques d'amortissement fortement différfentes de celles du caoutchouc plein, en particulier des courses d'écrasement très importantes et inadéquates dans beaucoup d'applications. D'autre part leur résistnce à la fatigue sous des écrasements répétés est très inférieure.

Par rapport à ces solutions connues l'invention propose une défense d'accostage du type constituée d'un manchon creux 1, à paroi épaisse en caoutchouc plein, caractérisée en ce que le manchon comprend une ou plusieurs chambres ou alvéoles fermées s'étendant annulairement et situées dans la paroi épaisse du manchon et dont le volume total n'excède pas 25% du volume du manchon afin que la densité apparente du manchon soit comprise entre 0,75 et 0,95.

Par manchon en caoutchouc plein à paroi épaisse on entend ici un manchon dont le caoutchouc présente pour l'essentiel une structure homogène, c'est à dire non cellulaire et dont l'épaisseur de la paroi est égale ou supérieure au quart du diamètre extérieur du manchon de façon que le manchon travaille essentiellement d'abord en flexion de la paroi puis en compression du caoutchouc.

Les chambres ou alvéoles réservées dans la paroi épaisse du manchon peuvent se présenter sous diverses formes, par exemple sous la forme de chambres annulaires indépendantes espacées les unes des autres dans le sens longitudinal ou encore sous la forme d'une ou plusieurs chambres hélicoïdales à spires espacées co-axiales au manchon. Néanmoins, ces chambres sont localisées dans la partie centrale de la paroi, de préférence dans le tiers central de cette épaisseur pour ne pas affleurer ou déboucher ni à l'extérieur ni à l'intérieur du manchon, non plus que sur ses surfaces d'extrémité.

Ces chambres ou alvéoles peuvent être laissées vides, c'est à dire ne contenant que de l'air à la pression atmosphérique, ou bien, elles peuvent être remplies de matériau cellulaire souple présentant une densité inférieure à 0,2.

Des exemples de réalisation de l'invention sont décrits ci-après en référence aux dessins ci-joints dans lesquels

les fig. 1 et 2 sont des vues schématiques illustrant une défense cylindrique flottante avec son mode d'accrochage;

les fig. 3–4 et 5 sont des vues partielles en coupe longitudinale illustrant diverses structures de la paroi du manchon;

les fig. 6 et 7 montrent encore un coupe longitudinale deux autres modes de réalisation.

Comme indiqué plus haut ce type de défense cylindrique flottante comprend essentiellement un manchon cylindrique creux en caoutchouc à paroi épaisse 1 qui est assujetti contre la paroi verticale d'un quai 2 ou autre ouvrage portuaire à protéger contre les chocs d'accostage des bateaux. Le manchon 1 est par exemple suspendu à un cable souple 3 formant une boucle traversant le manchon par son évidement central, le tout de façon que le manchon puisse se déplacer verticalement le long de la paroi du quai en fonction des variations du niveau de l'eau.

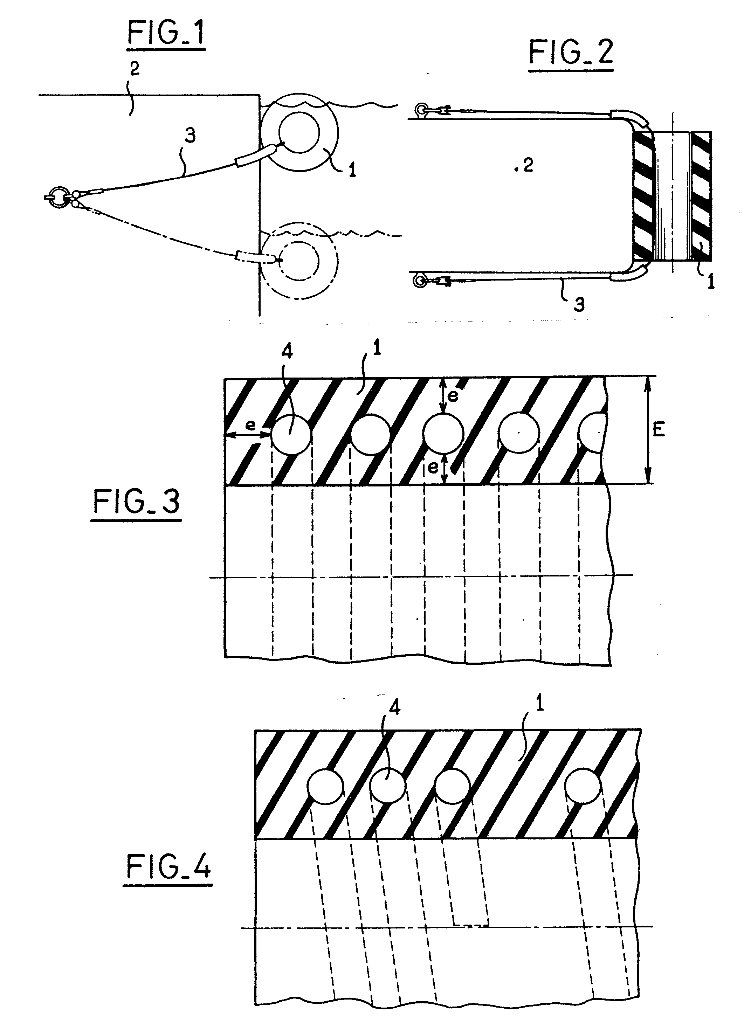

Dans l'exemple illustré sur la fig. 3, le manchon 1 présente au sein de sa paroi, à mi-épaisseur, des chambres annulaires indépendantes 4 alignées dans le sens longitudinal et dont les dimensions sont telles que, d'une part, elles sont espacées des surfaces extérieures du manchon d'une distance «e» au moins égale au ¼ de l'épaisseur E du manchon et, d'autre part, leur volume total n'excède pas environ 25% du volume de l'ensemble du manchon tel qu'il résulte de son diamètre et de l'épaisseur de sa paroi. Le volume total des chambres 4 est de préférence compris entre 5 et 20% du volume du manchon 1 et il est ajusté de façon que la densité apparente de l'ensemble du manchon se situe entre 0,75 et 0,95 pour assurer sa flottabilité avec une partie émergée suffisante pour une bonne visibilité. Dans l'exemple illustré sur la fig. 4, le manchon présente une ou plusieurs chambres fermées 4 en forme d'hélice à spires espacées co-axiales au manchon et situé au milieu de la paroi du manchon.

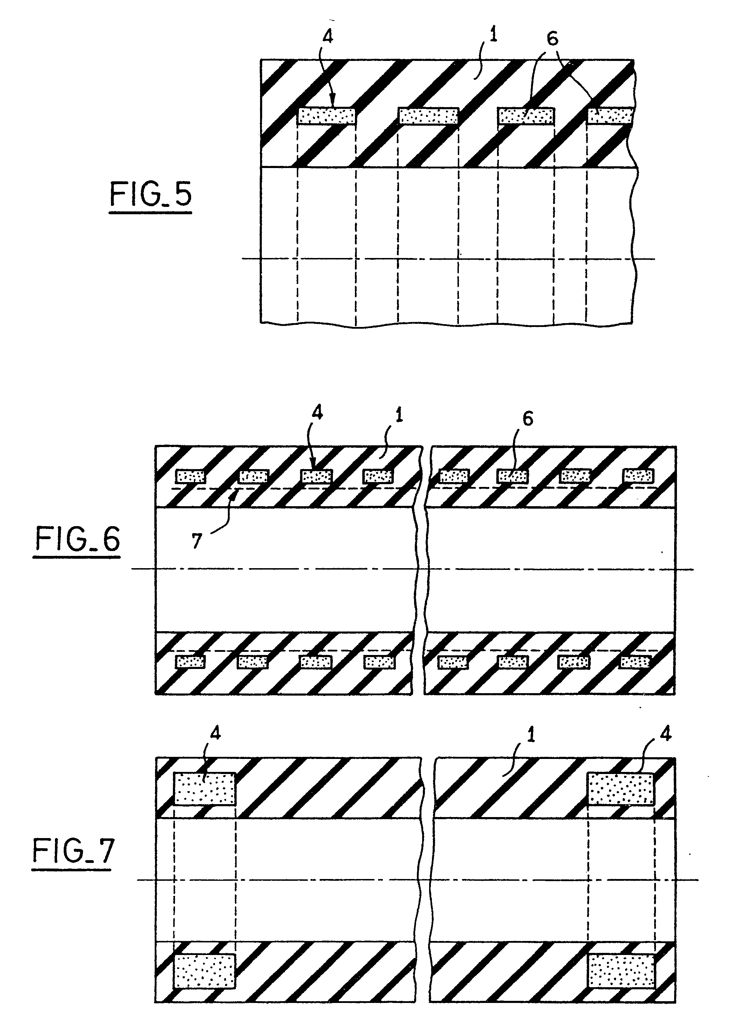

Dans les deux cas précédents, la forme de la section des chambres 4 peut être circulaire ou polygonale. Dans l'exemple illustré sur la fig. 5 les chambres 4 sont remplies de matériau cellulaire souple 6. Elles se présentent encore sous la forme d'anneaux distincts espacés les uns les autres et situés à mi-épaisseur de la paroi du manchon de façon à être complètement incluses dans le caoutchouc plein de ce manchon et à être protégées de toute part. Le matériau cellulaire souple est par exemple du polyéthylène expansé à cellules fermées présentant une densité inférieure à 0,2 et comprise par exemple entre 0,05 et 0,15. Le nombre et les dimensions des chambres 4 sont choisis en fonction de la densité propre du matériau cellulaire et de la densité propre du caoutchouc plein du manchon de façon à obtenir pour l'ensemble de ce manchon une densité résultante comprise entre 0,75 et 0,95.

Cependant pour ne pas altérer sensiblement les caractéristiques élastiques et la courbe d'amortissement du manchon par rapport à celles obtenues avec un manchon entièrement en caoutchouc plein homogène, on s'arrange pour que le volume total des chambres remplies de matériau cellulaire 6 n'excède pas 25% du volume de manchon.

Le caoutchouc plein du manchon peut être obtenu à partir d'un mélange caoutchouteux comprenant les charges usuelles pour lui donner les caractéristiques élastiques désirées, un tel caoutchouc présentant ordinairement une densité de l'ordre de 1 à 1,1 environ. Mais on peut aussi, suivant l'invention, utiliser un mélange caoutchouteux renforcé avec des charges appropriées pour obtenir un caoutchouc de densité inférieure à 1 et par exemple comprise entre 0,94 et 0,99 de sorte que ce caoutchouc est déjà par lui même auto flottant. En réservant dans le manchon en caoutchouc des chambres ou alvéoles vides ou remplies de matériau cellulaire 6 on augmente donc la flottabilité de l'ensemble du manchon. L'utilisation d'un caoutchouc plein de densité relativement faible peut donc permettre de reduire le volume des chambres et de conserver le maximum des propriétés amortissantes du caoutchouc plein du manchon tout en ayant une flottabilité telle que le manchon présente une partie hors d'eau plus importante et mieux visible. L'expression caoutchouc plein homogène pour le caoutchouc du manchon n'exclut pas la présence éventuelle d'insertion de renforcement tels que des cables ou tissu de renfort ou éléments en caoutchouc non alvéolaire mais renforcé par des fibres dispersées. C'est ainsi que la fig. 6 montre par exemple une défense cylindrique semblable à celle de la fig. 5 mais dans laquelle le manchon 1 est renforcé par une couche longitudinale de tissu ou de cables souples 7 placée en dessous des chambres 4 remplies de matériau cellulaire 6. Cette couche de renforcement pourrait être placée extérieurement au dessus des chambres 4 ou bien on pourrait avoir deux couches de renforcement semblables placées de part et d'autres des chambres 4. Ces couches de renforcement telles que 7 permettent d'augmenter la résistance du manchon, en particulier sa cohésion longitudinale et de mieux répartir les efforts résultant des chocs d'accostage dans la paroi du manchon.

La fig. 7 montre encore une autre réalisation dans laquelle les chambres fermées 4 sont localisées vers les extrémités du manchon 1 de façon à réserver entre elles une partie intermédiaire à paroi pleine, non alvéolée, et présentant ainsi le maximum de ses propriétés d'amortissement des chocs d'accostage. Cette partie intermédiaire présente de préférence une longueur au moins égale à la moitié de la longueur totale du manchon. Dans cette réalisation on peut avoir à chaque extrémité du manchon une ou plusieurs chambres de volume relativement plus grand que dans les cas précédents où les chambres sont reparties suivant toute la longueur du manchon.

Bien entendu on peut concevoir aisément d'autres variantes de réalisation à partir des exemples décrites ci-dessus. L'invention peut être appliquée à des défenses du même type mais dont le manchon n'est pas purement cylindrique, c'est à dire ayant une section polygonale sensiblement équivalente.

## Revendications

1. Défense d'accostage du type constituée d'un manchon creux (1), à paroi épaisse en caoutchouc plein, caractérisée en ce que le manchon comprend une ou plusieurs chambres ou alvéoles fermées (4) s'étendant annulairement et situées dans la paroi épaisse du manchon et dont le volume total n'excède pas 25% du volume du manchon afin que la densité apparente du manchon soit comprise entre 0,75 et 0,95.

2. Défense d'accostage selon la revendicaction 1, caractérisée en ce que le manchon en caoutchouc comprend une ou plusieurs chambres ou alvéoles fermées s'étendant annulairement au sein de la paroi épaisse du manchon, à mi-épaisseur, et espacées de la surface extérieure du manchon d'une distance au moins égale au ¼ de l'épaisseur (E) de la paroi du manchon.

3. Défense d'accostage selon l'une des revendications 1 ou 2, caractérisée en ce que le manchon comprend une ou plusieurs chambres ou alvéoles fermées en forme d'hélice à spires espacées coaxiales au manchon.

4. Défense d'accostage selon l'une des revendications 1 à 3, caractérisée en ce que les chambres ou alvéoles fermées sont localisées vers les extrémités du manchon et laissent entre elles une partie intermédiaire à paroi épaisse non alvéolée.

5. Défense d'accostage selon la revendication 4, caractérisée en ce que la partie intermédiaire du manchon n'ayant pas d'alvéoles présente une longueur au moins égale à la moitié de la longueur totale du manchon.

6. Défense d'accostage selon l'une des revendications 1 à 5, caractérisée en ce que les chambres ou alvéoles fermées sont remplies d'un matériau cellulaire souple (6) présentant une densité inférieure à 0,2.

7. Défense d'accostage selon l'une des revendications 1 à 6, caractérisée en ce que la paroi épaisse du manchon est renforcée par des insertions longitudinales (7) de tissu ou de cables souple s'étendant au dessous ou au dessus des chambres ou alvéoles fermées.

8. Défense d'accostage selon l'une des revendications 1 à 7, caractérisée en ce que le caoutchouc plein du manchon présente lui-même une densité inférieure à 1.

**Patentansprüche**

1. Anlegefender, bestehend aus einer Hohlwalze (1) mit einer dicken Wand aus Vollgummi, dadurch gekennzeichnet, dass die Walze eine oder mehrere sich ringförmig erstreckende geschlossene Kammern oder Zellen (4) aufweist, die in der dicken Wand der Walze angeordnet sind und deren Gesamtvolumen 25% des Volumens der Walze nicht übersteigt, so dass die scheinbare Dichte der Walze zwischen 0,75 bis 0,95 beträgt.

2. Anlegefender nach Anspruch 1, dadurch gekennzeichnet, dass die aus Gummi bestehende Walze eine oder mehrere geschlossene Kammern oder Zellen aufweist, die sich in der dicken Wand der Walze in der halben Dicke ringförmig erstrecken und deren Abstand von der Aussenfläche der Walze mindestens ¼ der Dicke (E) der Wand der Walze entspricht.

3. Anlagefender nach Anspruch 1 oder 2, dadurch gekennzeichnet, dass die Walze eine oder mehrere geschlossene Kammern oder Zellen in Form einer Schraubenlinie aufweist, deren Windungen koaxial zu der Walze im gegenseitigen Abstand angeordnet sind.

4. Anlagefender nach einem der Ansprüche 1 bis 3, dadurch gekennzeichnet, dass die geschlossenen Kammern oder Zellen an den Enden der Walze angeordnet sind und zwischen sich einen mittleren Bereich mit zellenloser dicker Wand belassen.

5. Anlagefender nach Anspruch 4, dadurch gekennzeichnet, dass der keine Zellen aufweisende mittlere Bereich der Walze eine Länge hat, die mindestens der Hälfte der Gesamtlänge der Walze entspricht.

6. Anlagefender nach einem der Ansprüche 1 bis 5, dadurch gekennzeichnet, dass die geschlossenen Kammern oder Zellen mit einem weichen zelligen Material (6) gefüllt sind, das eine Dichte von weniger als 0,2 hat.

7. Anlagefender nach einem der Ansprüche 1 bis 6, dadurch gekennzeichnet, dass die dicke Wand der Walze durch längsgerichtete Einlagen (7) aus Stoff oder aus weichen Kabeln verstärkt ist, die sich über oder unter den geschlossenen Kammern oder Zellen erstrecken.

8. Anlagefender nach einem der Ansprüche 1 bis 7, dadurch gekennzeichnet, dass der Vollgummi der Walze selbst eine Dichte von weniger als 1 hat.

**Claims**

1. Mooring fender of the kind formed by a hollow cylindrical sleeve (1) having a thick wall of solid rubber, characterised in that the sleeve comprises one or more closed chambers or cells (4) extending annularly and situated in the thick wall of the sleeve and of which the overall volume does not exceed 25% of the volume of the sleeve so that the apparent density of the sleeve may amount to between 0.75 and 0.95.

2. Mooring fender according to claim 1, characterised in that the rubber sleeve comprises one or more closed chambers or cells extending annularly at half-depth within the thick wall of the sleeve and spaced from the external surface of the sleeve by a distance at least equal to ¼ of the wall thickness (E) of the sleeve.

3. Mooring fender according to one of claims 1 or 2, characterised in that the sleeve comprises one or more closed chambers or cells in helical form having spaced turns co-axial with the sleeve.

4. Mooring fender according to one of claims 1 to 3, characterised in that the closed chambers or cells are situated towards the extremities of the sleeve and leave between them an intermediate portion having a thick non-cellular wall.

5. Mooring fender according to claim 4, characterised in that the intermediate portion of the sleeve not having cells has a length at least equal to half the total length of the sleeve.

6. Mooring fender according to one of claims 1 to 5, characterised in that the closed chambers or cells are filled with a flexible cellular material (6) having a density lower than 0.2.

7. Mooring fender according to one of claims 1 to 6, characterised in that the thick sleeve wall is reinforced by longitudinal inserts (7) of fabric or flexible cables extending below or above the closed chambers or cells.

8. Moring fender according to one of claims 1 to 7, characterised in that the solid rubber of the sleeve itself has a lower density than 1.

0110739

FIG_1

FIG_2

FIG_3

FIG_4

5

0110739

FIG_5

FIG_6

FIG_7

7